# EUROPEAN PATENT SPECIFICATION

(11) **EP 3 351 431 B1**
(45) Date of publication and mention of the grant of the patent: **15.05.2019**
(21) Application number: 18152399.4
(22) Date of filing: 18.01.2018
(51) Int. Cl.: B60R 9/045

(54) **IMPROVED ROOF BARS**
VERBESSERTE DACHRELINGS
BARRES DE TOIT AMELIORES

(30) Priority: 23.01.2017 IT 201700006733
(43) Date of publication of application: 25.07.2018
(73) Proprietor: F.LLI MENABO' S.R.L., 42025 Cavriago (Reggio Emilia) (IT)
(72) Inventor: SALSI, Andrea, 42011 Bagnolo in Piano (REGGIO EMILIA) (IT)
(74) Representative: Gagliardelli, Fabrizio

(56) References cited:
- EP-A1- 2 586 661
- WO-A1-97/19832
- DE-U1- 8 811 874

## Description

The present invention relates to improved roof bars, especially intended to be mounted on the roof of motor vehicles without railings.

Roof bars (or roof racks) are known, designed to transport loads on the roof of a vehicle, for example a car or a van, etc...

The bars are mounted in pairs, parallel to each other and orthogonal to the axis of the vehicle, and can support loads of various kinds, e.g. so-called roof boxes or roof mount bike racks or other accessories.

The market provides both bars that can be used on vehicles that have railings on the roof and bars that can be used on vehicles without railings; reference will be made below to the second type of bars.

The roof bars each comprise a linear support element, provided to support the load, and a pair of anchoring devices that grip the roof of the vehicle and keep the bar and the load firmly anchored to the roof.

In a roof bar of the known type, the support element is a metal profile and the anchoring devices are supplied separate from the profile and must be assembled thereto by the user.

In detail, each anchoring device can be engaged with the profile so as to be able to slide along it and is equipped with a means for stopping it in a specific point of the length of the profile itself.

Based on the model of the vehicle and, in detail, the width of the roof, the devices are moved along the support element, so that they are located at a suitable distance for mounting.

In detail, together with the bar assembly kit, the dimensional specifications are also provided for performing the adjustment of the anchoring devices and, usually, also accessories for aiding the adjustment such as, for example, graduated abutments or the like.

After fixing the anchoring devices in position, in accordance with the aforementioned specifications, the user mounts the bars on the roof.

The bar anchoring devices are configured to be locked at the lower edge of the roof which defines superiorly the access opening to the passenger compartment, which is closed by the vehicle door.

For that purpose, the locking devices comprise an abutment that abuts with the upper and outer surface of the roof and a jaw that is engaged with the said lower edge of the roof so as to be arranged between the roof and the door, when the latter is closed.

Since the roofs of vehicles do not have a regular shape, in order for bars to be fixed correctly to the roof, they must be located in a specific position with respect to the longitudinal extension of the roof itself.

A known methodology for correctly arranging the bars is to take the vertical upright of the shell as a reference, which posteriorly defines the access opening to the passenger compartment.

By placing the two anchoring devices at a predetermined distance from the upright, which varies with vehicle models, at the right and left openings respectively of the accesses to the passenger compartment, and then by clamping the jaws through relevant screws, the installation of the bar is achieved.

EP 2 586 661 discloses a roof bar for vehicles according to the preamble of claim 1.

The known systems have some limits, explained below.

In order for the load to be transported safely on the bars, the latter must be as exactly perpendicular to the central longitudinal axis of the vehicle as possible.

However, in practice, the user rarely manages, at the first attempt, to place the two locking devices exactly aligned perpendicularly to the vehicle axis. Therefore, after positioning the two locking devices at the opposite sides of the roof and before tightening the screws of the jaws, the user moves in front of or behind the vehicle to check the correct arrangement of the bars.

If the user notices that they are oblique with respect to the vehicle axis, they proceed to adjust the position of the locking devices, substantially by turning them in a horizontal plane, proceeding with subsequent attempts, until a satisfactory result is obtained.

At this point, the user tightens the jaws.

This process is considered inconvenient by many users and, therefore, the need has been perceived for some time for roof bars whose correct installation on the roof of the vehicle is obtained more quickly and conveniently than that of known bars.

The technical task underlying the present invention is therefore to provide a roof bar which obviates the drawbacks of the prior art and satisfies the need specified above.

The stated technical task is reached by the roof bar constructed in accordance with claim 1.

Further characteristics and advantages of the present invention will become more apparent from the approximate and thus non-limiting description of a preferred, but not exclusive, embodiment of a roof bar, as illustrated in the accompanying drawings, in which:
- figure 1 represents an axonometric view of a bar according to the present invention;
- figure 2 represents an exploded view of the bar of figure 1;
- figure 3 represents a detail of a longitudinal sectional view of the bar;
- figure 4 is a schematic view, from above, of a vehicle mounting a pair of bars; and
- figure 5 represents, in a stylised way, a user finalising the installation of the bar on the roof of a vehicle.

With reference to the aforesaid figures, 1 generically denotes a roof bar or roof rack, according to the invention.

The bar 1 is designed to transport loads on the roof of a vehicle 2, for example a car or a van, etc...

In practice, the bars 1 realised in accordance with the invention have the uses already discussed above, however having different structural and functional characteristics from those of known bars.

As mentioned, the bar 1 according to the invention is especially intended to be mounted on the roof of motor vehicles 2 without railings and is therefore designed to be anchored directly to the roof, engaging the lower edge that defines the access door to the passenger compartment, in the way already illustrated in the discussion of the prior art.

The bar 1 proposed firstly comprises a rectilinear support element 10, hollow and adapted to support a load.

Preferably, such support element 10 includes a metal profile 11, e.g. made of aluminium.

Below, for illustrative convenience purposes, reference will be made to the non-limiting example of the case in which the support element 10 comprises the said profile 11; however, the characteristics described in relation to the profile 11 can also refer to different types of support elements.

The profile 11 was designed to support a load anchored to it according to the known methods and, in detail, it can support a roof box or a bike rack or a cargo carrier or in general all those load carrying accessories used for increasing the load that can be transported safely on the roof of a vehicle. The profile 11 comprises a lower surface 12 in which at least one longitudinal guide opening 13 is afforded, preferably a through opening.

In the present description, the terms related to the orientation of the components of the invention, such as "upper", "lower", etc. refer to their arrangement in use.

Therefore, for example, the lower surface 12 of the profile 11 is that which, in use, is turned downwards, i.e. towards the roof of the vehicle 2 on which the related bar 1 is applied.

Furthermore, in use, the profile 11 is intended to be positioned horizontally on the roof.

The profile 11 may comprise, instead of a single full-length opening 13, two openings 13 that originate from respective opposite longitudinal ends of the profile 11 itself and end after a predetermined extension in length.

The opening or openings 13 are preferably arranged at the centre of the lower side 13 of the profile 11 and extend parallel to the longitudinal axis thereof.

The said ends of the profile 11 may comprise mouths closed by removable plugs 14.

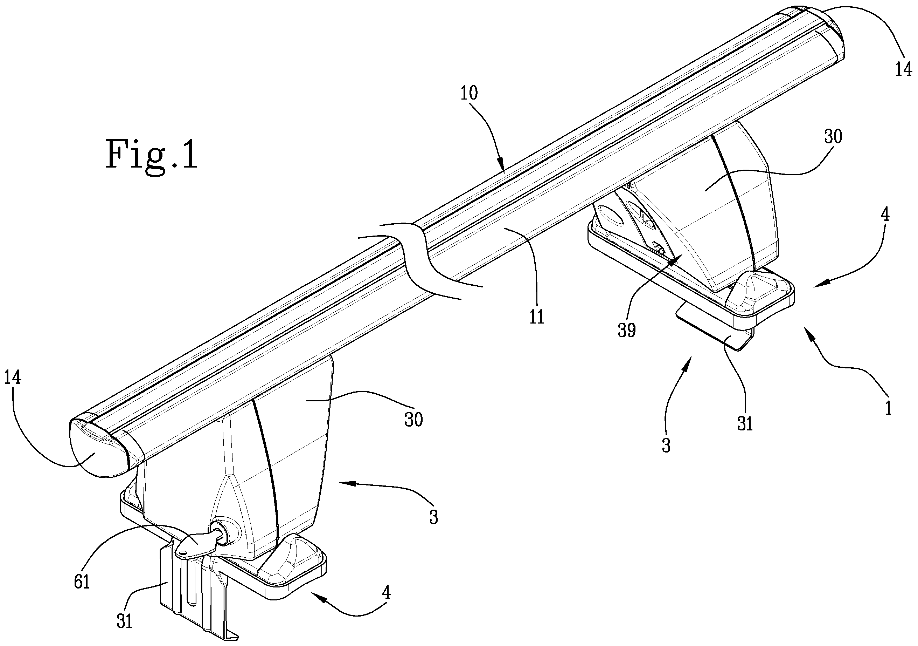

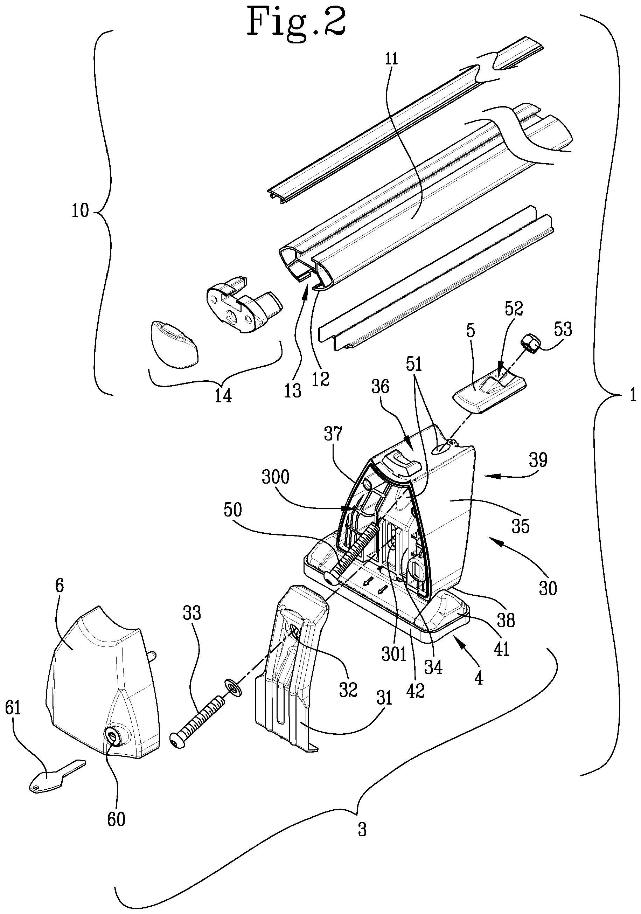

The invention also includes two anchoring devices 3 to the roof of the vehicle 2, provided for being applied contextually to opposite sides of the roof itself, i.e. at opposite access openings to the passenger compartment (see figures 1 and 2).

Each anchoring device 3 comprises a gripping element 31 for engaging an edge of the roof, such gripping element 31 being provided with a first hole 32 in which a first screw 33 is removably inserted.

Preferably, the gripping element includes a plate-shaped jaw 31, for example made of metal, through which the first hole 32 passes from one side to the other.

The jaw 31 may be formed by a series of portions, preferably flat, angled two by two, which define a concave structure adapted to be anchored to the edge of the roof, being placed between the frame of the door (or window) and the roof itself.

The anchoring devices 3 then comprise a respective main body 30, for example made of plastic material, which comes into direct contact with the profile 11, interposed between it and the roof.

The main body 30 may have an inner part 34 and a series of outer walls 35, 36, 37, 38 closed in a loop around a substantially horizontal axis (see in detail figure 2).

In any case, the main body 30 firstly includes a top side 36, preferably defined by a concave wall which is in accordance with the lower convex wall of the profile 11; clearly, such top wall 36 is in direct contact with the lower surface 12 of the related profile 11.

The main body 30 may also include a lower side 38, opposite the top side 36, an inner side 39, i.e. turned towards the inside of the roof, which extends in a substantially vertical direction and an outer side 300, opposite the inner one 39 and therefore turned towards the outside of the roof, also substantially extending vertically.

In detail, in use, the inner side 39 of the main body 30 of an anchoring device 3 that supports a profile 11 is turned towards the inner side 39 of the other anchoring device 3 that supports the same profile 11.

The outer side 300 is located at the side of the roof of the vehicle 2 and it is the side that may be directly accessible to the user U during the installation or uninstallation of the bars.

The outer side 300 is provided with a second hole 301 that removably receives the first screw 33, screwable and unscrewable by the user U, to enable the jaw 31 to be alternatively tightened and loosened.

The second hole 301 is preferably a through hole and in this case it may extend from the outer side 300 to the inner side 39 of the main body 30. At the inner side 39 there may be a threaded engagement nut 302 for the first screw 33 or the main body 30 may be provided with a nut screw.

The head of the first screw 33 is accessible to a screwdriver from the outer side 300 of the main body 30.

Preferably, for screwing and unscrewing convenience, the second hole 301 is oblique with respect to the horizontal direction, being inclined upwards between the outer 300 and the inner side of the main body 30. Each anchoring device 3 preferably includes an abutment element 4, provided to come into direct contact with the roof of the vehicle 2 and to cooperate with the gripping element 31 for the purpose of anchoring to the roof itself.

The abutment element 4 is located at the lower side 38 of the main body 30, opposite the top side 36, and may be fixed to the main body 30 so as to be able to oscillate with respect to an axis passing through the body itself.

Preferably, in use, the oscillation axis of the abutment element 4 is arranged horizontal and perpendicular to the extension in length of the profile 11; in practice, such axis is parallel to the length of the lower side 38 of the main body 30.

The abutment element 4 may be equipped with a soft lower surface adapted to come into direct contact with the roof, to avoid scratching, particularly of the paint.

In practice, the abutment element 4 may comprise a plate 41, for example made of plastic material, that superiorly conforms a coupling means for the oscillatable coupling to the main body 30, while at its own lower surface it wears a cover 42 made of soft elastomeric material that comes into direct contact with the roof of the vehicle.

Advantageously, the invention also includes a coupling element 5, that may comprise a shaped block, for example made of plastic or metal material, inserted with the possibility to slide in the cavity of the profile 11. To be precise, the coupling element 5 is located above the inner surface of the lower wall of the profile 11 and is intended to slide along it, i.e. along the longitudinal extension of the profile 11, substantially above the respective guide opening 13.

In practice, the coupling element 5 is of the size and shape so that it does not exit from the lower guide opening 13 and can slide along the longitudinal cavity of the profile 11.

According to an important aspect of the invention, the main body 30 of each anchoring device 3 comprises a third through hole 51, afforded between the outer side 300 and the top side 36 and the coupling element 5 comprises a fourth hole 52, aligned with the third hole 51.

The third hole 51 crosses the top wall of the main body 30 which defines its top side 36.

In even more detail, the third hole 51 may be afforded so as to cross the aforementioned inner part 34 and the top wall 36 of the main body 30.

In the third and in the fourth hole 51, 52 a second screw 50 is removably inserted which joins the main body 30 to the coupling element 5, crossing the guide opening 13 of the profile 11 (see in particular figure 2).

The second screw 50 is screwable and unscrewable so as to alternatively enable the anchoring device 3 to slide with respect to the profile 11 or the reciprocal firm locking.

Preferably, the fourth hole 52 is a through hole and a nut 53 or a nut screw are provided for tightening the second screw 50.

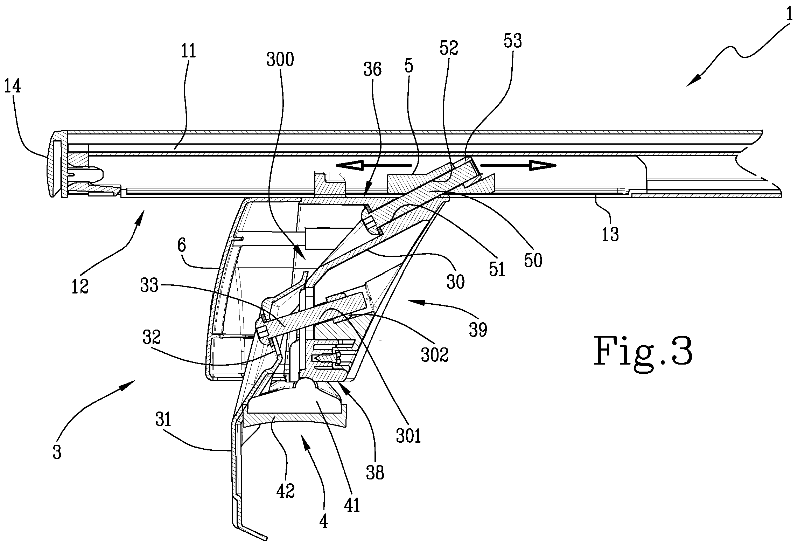

To be precise, as shown in figure 3, the coupling element 5 may superiorly conform a seat for receiving the nut 53.

Advantageously, the third and the fourth hole 51, 52 may be oblique with respect to the longitudinal extension direction of the support element 10, i.e. with respect to a horizontal plane.

Also the head of the second screw 50 is accessible to a screwdriver from the outer side 300 of the main body 30, like the head of the first screw 33. Before illustrating further advantageous aspects of the invention, there follows an explanation of the functioning thereof.

The user U takes each bar 1, with the two screws 33, 50 inserted in the respective pairs of holes 32, 302, 51, 52 but not completely tightened and takes them to the vehicle 2, positioning them on the roof, so that the abutment elements 4 of the anchoring devices 3 rest on the roof in proximity to the edges that define the access openings to the passenger compartment, as discussed above.

The anchoring device 3 and the profile 11 are joined but reciprocally movable along the longitudinal extension direction of the profile 11 itself. This aspect, together with the fact that the second screw 50, which allows the device to be locked to the profile 11, is easily reachable from the outer side 300 of the main body 30, allows the user U to quickly and conveniently adjust the orientation of the bar 1, so as to arrange it as perpendicular as possible to the axis of the vehicle 2.

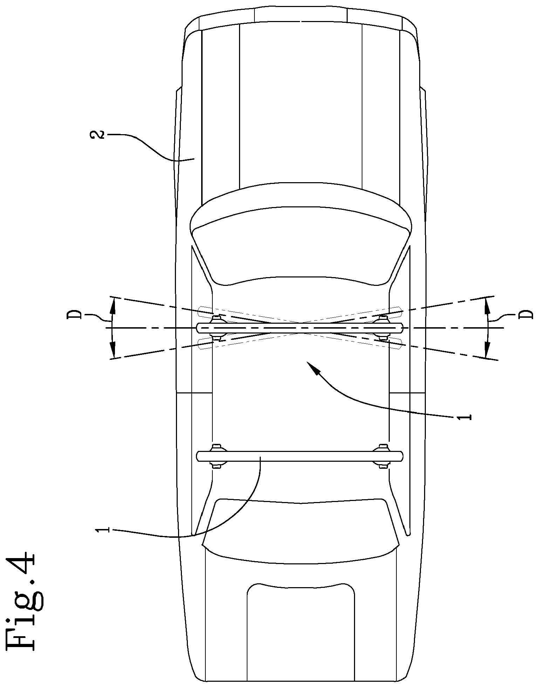

In fact, when the user U realises that the bar 1 is significantly inclined with respect to the ideal correct installation direction D, as shown schematically in figure 4, they can directly reposition the anchoring device 3 on the roof, simply by turning the bar 1 to the desired position, since the device and the profile 11 can slide with respect to each other without separating.

This method is not allowed by bars of the prior art, where the fixing of anchoring devices and the profile in the ideally correct position must be performed before bringing the bar to the vehicle.

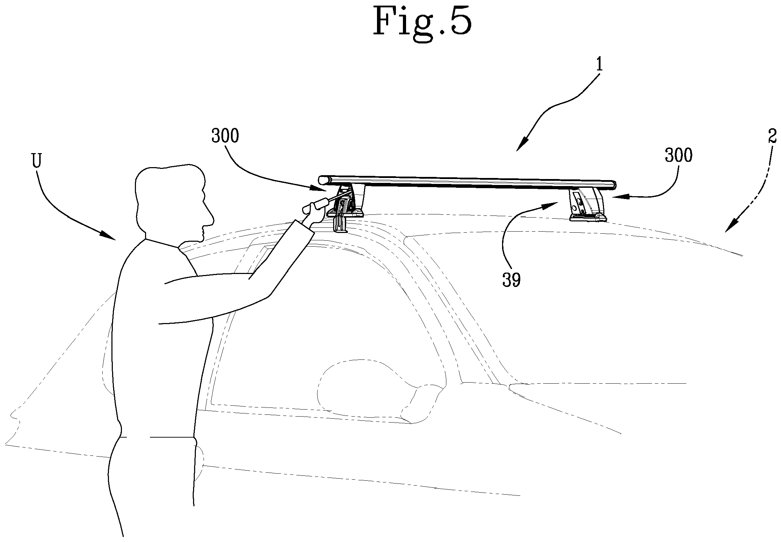

Once the bar 1 has been arranged perpendicular to the axis of the vehicle 2, the user U will provide simply to fix both screws 33, 50, whose heads are easily reachable from the outer side 300 of the main body 30 of the device, i.e. from the side of the vehicle, as shown in figure 5.

In this way, the anchoring of the bar 1 takes place through the jaws 31 of the devices 3 and the firm coupling of these to the profile 11, through the coupling element 5, to obtain a safe support for the load correctly arranged on the roof.

Hence it can be seen how the invention completely overcomes the limits of the prior art illustrated above.

To be precise, the invention makes available two roof bars 1, provided to be placed parallel to each other and surmounting the roof, with the profiles 11 that remain at a predetermined height from the surface of the roof itself and with the four anchoring devices 3 that are engaged with the edge of the roof at a relative access opening to the passenger compartment. Preferably, each anchoring device 3 comprises a door 6 for closing the outer side 300 of the main body 30, equipped with a lock 60 that can be opened/closed using a key 61, so as to enable/prohibit direct access to the first and the second screw 33, 50.

In practice, the door 6 cooperates with the aforementioned outer walls 36, 36, 37, 38 of the main body 30 so as to isolate the outer side 300 where the first and the second screw 33, 50 are located, thus preventing any tampering or theft of the bars 1.

The invention is also configured as a kit which, once mounted, defines the roof bar 1 proposed.

The kit comprises, for each of the two bars 1, the support element 10 (which can comprise the said profile 11), the two main bodies 30 of the related anchoring devices 3, two coupling elements 5, insertable with the possibility to slide in the support element 10, two gripping elements 31 (e.g. in the form of jaws), at least a first screw 33 and at least a second screw 50.

The mounting of the kit is performed as explained below.

The main body 30 and the jaw 31 are taken and joined by threading the first screw 33 into the first and into the second hole 32, 301.

The profile 11 is taken and the two coupling elements 5 are inserted through the aforementioned opposite mouths, and then the second screws 50 are threaded into the third and fourth holes 51, 52.

At this point, the bar 1 is first mounted and is ready for installation on the roof of the vehicle 2 according to the methods described above.

Similarly to systems of the prior art, the kit may also comprise specifications on the reciprocal distance to provide between the two anchoring devices, based on the different dimensional characteristics of the roofs of different models of vehicles 2.

## Claims

1. A roof bar (1) for vehicles (2) comprising a hollow support element (10) that is suitable for supporting a load, and two anchoring devices (3) for anchoring the bar (1) to the roof of a vehicle (2);
wherein the support element (10) comprises a lower surface (12) in which at least one longitudinal guide opening (13) is afforded;
wherein each anchoring device (3) comprises:
a gripping element (31) for engaging an edge of the roof, said gripping element (31) being provided with a first hole (32) in which a first screw (33) is inserted; and
a main body (30) comprising: a top side (36), which, when in use, is located in contact with said lower surface (12) of the support element (10);
an outer side (300) that is accessible to the user (U) and that is provided with a second hole (301), which removably receives said first screw (33) that can be screwed or unscrewed by a user (U) so as to enable a user alternatively to tighten or to loosen said gripping element (31);
said bar (1) being **characterized in that** it comprises a coupling element (5) inserted in the cavity of the support element (10); **in that** said main body (30) comprises a third hole (51), which is a through hole and is afforded between said outer side (300) and said inner side (39); and **in that** said coupling element (5) comprises a fourth hole (52), which can be aligned with said third hole (51); in the third and the fourth hole (51, 52) there being removably inserted a second screw (50) that joins the main body (30) to the coupling element (5) and that passes through said guide opening (13) in the support element (10), said second screw (50) being unscrewable or screwable, so as to alternatively enable the anchoring device (3) to slide with respect to the bar (1) or the anchoring device (3) and the bar (1) to be mutually locked.

2. The bar (1) according to the preceding claim, wherein each anchoring device (3) comprises an abutment element (4) provided to come into contact with the roof of the vehicle and cooperate with the gripping element (31) for the purpose of anchoring it to the roof, the anchoring device (3) being located on a lower side (38) of the main body (30), opposite the top side (36).

3. The bar (1) according to the preceding claim, wherein said abutment element (4) is provided with a soft surface for direct contact with the roof, so as to prevent scratches.

4. The bar (1) according to at least one of the preceding claims, wherein said gripping element comprises a plate-shaped jaw (31) through which the first hole (32) passes from one side to the other.

5. The bar (1) according to at least one of the preceding claims, wherein the third hole (51) is afforded in one wall defining said top side (36).

6. The bar (1) according to the preceding claim, wherein the third and the fourth hole (51, 52) are oblique with respect to the direction of longitudinal extension of the support element (10).

7. The bar (1) according to at least one of the preceding claims, wherein the heads of the first and the second screw (33, 50) are accessible to a screwdriver from the outer side (300) of the main body (30).

8. The bar (1) according to at least one of the preceding claims, wherein the support element (10) comprises a metal profile (11), in which the guide opening or openings are afforded in a lower wall (12).

9. The bar (1) according to at least one of the preceding claims, wherein each anchoring device (3) comprises a door (6) for closing the outer side (300) of the main body (30), said door (6) being provided with a lock (60) that can be opened so as to enable direct access to the first and the second screw (50) or closed so as to prevent access.

10. An assembly kit for obtaining a roof bar (1) according to at least one of the preceding claims and comprising:
the support element (10);
two main bodies (30) of relative anchoring devices (3);
two coupling elements (5) that are insertable with the possibility of sliding into the support element (10);
two gripping elements (31);
at least a first screw (33) and at least a second screw (50).

## Patentansprüche

1. Dachreling (1) für Fahrzeuge (2), umfassend ein hohles Trägerelement (10), das zum Tragen einer Last geeignet ist, und zwei Verankerungsvorrichtungen (3) zum Verankern der Reling (1) am Dach eines Fahrzeugs (2);
wobei das Trägerelement (10) eine untere Oberfläche (12) beinhaltet, in der zumindest eine Längsführungsöffnung (13) ausgebildet ist;
wobei jede Verankerungsvorrichtung (3) umfasst:
ein Greifelement (31), das dafür bestimmt ist, mit einer Kante des Dachs in Eingriff zu treten, wobei das Greifelement (31) ein erstes Loch (32) aufweist, in das eine erste Schraube (33) eingeführt ist; und
einen Hauptkörper (30), umfassend: eine Oberseite (36), die, im Gebrauch, in Berührung mit der unteren Oberfläche (12) des Trägerelements (10) angeordnet ist;
eine Außenseite (300), die für den Benutzer (U) zugänglich ist und die ein zweites Loch (301) aufweist, das die erste Schraube (33) abnehmbar aufnimmt, welche von einem Benutzer (U) eingeschraubt oder ausgeschraubt werden kann, um es ein Benutzer zu ermöglichen, das Greifelement (31) entweder festzuziehen oder zu lösen;
wobei die Reling (1) **dadurch gekennzeichnet ist, dass** sie ein Kupplungselement (5) umfasst, das in den Hohlraum des Trägerelements (10) eingeführt ist; und dadurch, dass der Hauptkörper (30) ein drittes Loch (51) beinhaltet, das ein Durchgangsloch ist und zwischen der Außenseite (300) und die Innenseite (39) ausgebildet ist; und dadurch, dass das Kupplungselement (5) ein viertes Loch (52) beinhaltet, das mit dem dritten Loch (51) fluchtend ausgerichtet werden kann; wobei in dem dritten und dem vierten Loch (51, 52) eine zweite Schraube (50) abnehmbar eingeführt ist, die den Hauptkörper (30) mit dem Kupplungselement (5) verbindet und die durch die Führungsöffnung (13) in dem Trägerelement (10) geführt ist, wobei die zweite Schraube (50) ausgeschraubt oder eingeschraubt werden kann, so dass entweder die Verankerungsvorrichtung (3) relativ zu der Reling (1) gleiten kann oder die Verankerungsvorrichtung (3) und die Reling (1) relativ zueinander blockiert sind.

2. Reling (1) nach dem vorhergehenden Anspruch, wobei jede Verankerungsvorrichtung (3) ein Anschlagelement (4) beinhaltet, das dafür vorgesehen ist, mit dem Dach des Fahrzeugs in Berührung zu gelangen und mit dem Greifelement (31) zusammenzuwirken, um dieses am Dach zu verankern, wobei die Verankerungsvorrichtung (3) auf einer Unterseite (38) des Hauptkörpers (30) angeordnet ist, die der Oberseite (36) gegenüberliegt.

3. Reling (1) nach dem vorhergehenden Anspruch, wobei das Anschlagelement (4) eine weiche Oberfläche für den direkten Kontakt mit dem Dach aufweist, um Kratzer zu vermeiden.

4. Reling (1) nach zumindest einem der vorhergehenden Ansprüche, wobei das Greifelement eine plattenförmige Greifbacke (31) beinhaltet, durch die das erste Loch (32) von einer Seite zur anderen führt.

5. Reling (1) nach zumindest einem der vorhergehenden Ansprüche, wobei das dritte Loch (51) in einer Wand ausgebildet ist, welche die Oberseite (36) definiert.

6. Reling (1) nach dem vorhergehenden Anspruch, wobei das dritte und das vierte Loch (51, 52) in Bezug auf die Längsausdehnungsrichtung des Trägerelements (10) schräg ausgerichtet sind.

7. Reling (1) nach zumindest einem der vorhergehenden Ansprüche, wobei die Köpfe der ersten und der zweiten Schraube (33, 50) für einen Schraubendreher von der Außenseite (300) des Hauptkörpers (30) her zugänglich sind.

8. Reling (1) nach zumindest einem der vorhergehenden Ansprüche, wobei das Trägerelement (10) ein Metallprofil (11) beinhaltet, in dem die Führungsöffnung oder -öffnungen an einer unteren Wand (12) davon ausgebildet ist oder sind.

9. Reling (1) nach zumindest einem der vorhergehenden Ansprüche, wobei jede Verankerungsvorrichtung (3) eine Tür (6) zum Schließen der Außenseite (300) des Hauptkörpers (30) beinhaltet, wobei die Tür (6) mit einem Schloss (60) ausgestattet ist, das geöffnet werden kann, um den direkten Zugriff auf die erste und die zweite Schraube (50) zu ermöglichen, oder geschlossen werden kann, um den Zugriff zu verhindern.

10. Montagesatz zum Erhalten einer Reling (1) nach zumindest einem der vorhergehenden Ansprüche und umfassend:
das Trägerelement (10);
zwei Hauptkörper (30) der jeweiligen Verankerungsvorrichtungen (3);
zwei Kupplungselemente (5), die gleitbar in das Trägerelement (10) eingeführt werden können;
zwei Greifelemente (31);
zumindest eine erste Schraube (33) und zumindest eine zweite Schraube (50).

## Revendications

1. Une barre de toit (1) pour véhicules (2) comprenant un élément de support (10), creux, qui est destiné à supporter une charge, et deux dispositifs d'ancrage (3) pour ancrer la barre (1) au toit d'un véhicule (2) ;
dans laquelle l'élément de support (10) comprend une surface inférieure (12) dans laquelle au moins une ouverture longitudinale de guidage (13) est réalisée ;
dans laquelle chaque dispositif d'ancrage (3) comprend :
un élément de prise (31) pour assujettir un bord du toit, ledit élément de prise (31) étant muni d'un premier trou (32) dans lequel une première vis (33) est introduite ; et
un corps principal (30) comprenant : un côté supérieur (36), qui, en utilisation, est en contact avec ladite surface inférieure (12) de l'élément de support (10) ; un côté extérieur (300) qui est accessible au utilisateur (U) et qui est muni d'un deuxième trou (301), qui reçoit de façon amovible ladite première vis (33) qui peut être vissée ou dévissée par un utilisateur (U) de manière à permettre au utilisateur de serrer ou de desserrer alternativement ledit élément de prise (31);
ladite barre (1) étant **caractérisée en ce qu'**elle comprend un élément d'accouplement (5) inséré dans la cavité de l'élément de support (10) ; **en ce que** ledit corps principal (30) comprend un troisième trou (51), qui est un trou traversant et est réalisé entre ledit côté extérieur (300) et ledit côté intérieur (39); et **en ce que** ledit élément d'accouplement (5) comprend un quatrième trou (52), qui peut être aligné avec ledit troisième trou (51) ; dans le troisième et le quatrième trous (51, 52) étant introduite de façon amovible une deuxième vis (50) qui unit le corps principal (30) à l'élément de couplage (5) et qui passe à travers ladite ouverture de guidage (13) de l'élément de support (10), ladite deuxième vis (50) pouvant être dévissée ou vissée, de manière à permettre alternativement le coulissement du dispositif d'ancrage (3) par rapport à la barre (1) ou le blocage réciproque du dispositif d'ancrage (3) et de la barre (1).

2. La barre (1) selon la revendication précédente, dans laquelle chaque dispositif d'ancrage (3) comprend un élément de butée (4) prévu pour venir en contact avec le toit du véhicule et coopérer avec l'élément de prise (31) afin de l'ancrer au toit, le dispositif d'ancrage (3) étant situé sur un côté inférieur (38) du corps principal (30), opposé au côté supérieur (36).

3. La barre (1) selon la revendication précédente, dans laquelle ledit élément de butée (4) est muni d'une surface souple pour le contact direct avec le toit, de manière à éviter des rayures.

4. La barre (1) selon au moins l'une des revendications précédentes, dans laquelle ledit élément de prise comprend une mâchoire en forme de plaque (31) à travers laquelle le premier trou (32) passe de part et d'autre.

5. La barre (1) selon au moins l'une des revendications précédentes, dans laquelle le troisième trou (51) est réalisé dans une paroi qui définit ledit côté supérieur (36).

6. La barre (1) selon la revendication précédente, dans laquelle le troisième et le quatrième trous (51, 52) sont obliques par rapport à la direction de l'extension longitudinale de l'élément de support (10).

7. La barre (1) selon au moins l'une des revendications précédentes, dans laquelle les têtes de la première et de la deuxième vis (33, 50) sont accessibles à un tournevis par le côté extérieur (300) du corps principal (30).

8. La barre (1) selon au moins l'une des revendications précédentes, dans laquelle l'élément de support (10) comprend un profilé métallique (11), dans lequel l'ouverture ou les ouvertures de guidage sont réalisées dans une paroi inférieure (12) .

9. La barre (1) selon au moins l'une des revendications précédentes, dans laquelle chaque dispositif d'ancrage (3) comprend une porte (6) pour fermer le côté extérieur (300) du corps principal (30), ladite porte (6) étant munie d'une serrure (60) qui peut être ouverte de manière à permettre un accès direct à la première et à la deuxième vis (50) ou fermée pour empêcher l'accès.

10. Un kit d'assemblage pour obtenir une barre de toit (1) selon au moins l'une des revendications précédentes et comprenant:
l'élément de support (10);
deux corps principaux (30) de dispositifs d'ancrage (3) correspondants;
deux éléments d'accouplement (5) qui peuvent être insérés avec possibilité de coulissement dans l'élément de support (10);
deux éléments de prise (31);
au moins une première vis (33) et au moins une deuxième vis (50).
